# EUROPEAN PATENT SPECIFICATION

(11) **EP 3 045 964 B1**
(45) Date of publication and mention of the grant of the patent: **27.06.2018**
(21) Application number: 14841746.2
(22) Date of filing: 17.01.2014
(51) Int. Cl.: G02F 1/13357, F21V 8/00, F21S 8/00

(54) **BACKLIGHT MODULE**
HINTERGRUNDBELEUCHTUNGSMODUL
MODULE DE RÉTROÉCLAIRAGE

(30) Priority: 09.09.2013 CN 201320560218 U
(43) Date of publication of application: 20.07.2016
(73) Proprietor: SHENZHEN TCL NEW TECHNOLOGY CO., LTD, Shenzhen, Guangdong 518052 (CN)
(72) Inventor: YANG, Minna, Shenzhen Guangdong 518052 (CN); WU, Shengsheng, Shenzhen Guangdong 518052 (CN); LI, Jianlin, Shenzhen Guangdong 518052 (CN)
(74) Representative: Kuhnen & Wacker Patent- und Rechtsanwaltsbüro PartG mbB
(86) International application number: PCT/CN2014/070831
(87) International publication number: WO 2015/032175

(56) References cited:
- CN-A- 102 954 408
- CN-A- 103 133 950
- CN-U- 202 938 175
- KR-A- 20120 068 499
- KR-A- 20120 075 015
- US-A1- 2008 297 687
- US-A1- 2011 141 769
- US-A1- 2013 114 299
- US-A1- 2013 114 299
- US-A1- 2013 114 301
- US-A1- 2013 135 896

## Description

### TECHNICAL FIELD

The present disclosure relates to liquid crystal display (LCD), and particularly to a backlight modulecomprising a lamp strip and a light guide plate, and further comprising a quantum dot glass tube and a fixing part, the fixing part being a hollow structure, the quantum dot glass tube being provided in the cavity of the fixing part which is positioned between the lamp strip and the light guide plate, one side wall of the fixing part being adjacent to the frame of the lamp strip, and the other side wall of the fixing part being engaging with the light guide plate.

### DESCRIPTION OF RELATED ART

Such a backlight module is known from US 2013/114299 A1. This document discloses the features of the preamble of claim 1. In a conventional liquid crystal display, white LED is usually used as a backlight source, and a desired LCD backlight can be achieved through a reasonable arrangement of light guide plate and optical film. With increasing demand for high color gamut, high color saturation and energy-saving lamps, current solutions of white light source, high gamut and high color saturation in backlight are achieved by: ultraviolet LED with RGB phosphors; blue LED with RG (red and green) phosphors; blue LED with green LED plus red LED; and the like. Such methods can improve the color gamut, but they are difficult to be implemented and costly. Thus, quantum dot (QD) material is applied to the backlight module, through which, the traditional white LED light source is replaced by high-frequency spectrum light source (such as blue LED). Under irradiation of high-frequency light source, the QD material can be excited to produce different wavelength spectrums. By adjusting the size of the QD material, the color of the synthesized light can be adjusted, thus achieving requirement of backlight in high color gamut LCD display. Thus, how to firmly fix the QD material in the backlight module is an issue needed to be solved currently.

US 2013/114299 A1 discloses a display device including a light guide plate. A light source is disposed on a side surface of the light guide plate, a light conversion member disposed between the light source and the light guide plate, and a first adhesion member closely attached to the light guide plate and the light conversion member.

US 2013/135896 A1 teaches a planar light source device comprising a light guide plate, with its upper surface and lower surface as a first surface and a second surface. At least a light strip is provided with a plurality of light-emitting-diodes (LEDs). The light strip is located on a side of the light guide plate, and said LEDs are disposed in said light guide plate to emit light. A reflective plate is disposed outside said second surface to reflect light. A diffusion plate, disposed outside said first surface to scatter light reflected by said reflective plate.

### BRIEF SUMMARY OF THE DISCLOSURE

A main object of the present disclosure is to provide a backlight module, which can firmly fix the QD material in the backlight module.

The present disclosure provides a backlight module which includes a lamp strip and a light guide plate, and further includes a quantum dot glass tube and a fixing part, the fixing part being a hollow structure, the quantum dot glass tube being provided in the cavity of the fixing part which is positioned between the lamp strip and the light guide plate, one side wall of the fixing part being abutting on the frame of the lamp strip, and the other side wall of the fixing part being engaging with the light guide plate.

Preferably, the side wall facing the lamp strip of the fixing part is provided with a plurality of first recesses arranged in turn, the shape of the first recess is matched with the shape of an LED lamp in the lamp strip, and after the frame of the first recess abuts on the frame of the lamp strip, one LED lamp is correspondingly received in one first recess. The side wall facing the lamp strip of the fixing part is provided with a second recess, the shape of the second recess is matched with the shape of the lamp strip, and after the frame of the second recess abuts on the frame of the lamp strip, the lamp strip is received in the second recess.

Preferably, the side wall facing the lamp strip of the fixing part is provided with a plurality of protrusions at the four corners or the four edges thereof respectively, the height of the protrusion is greater than the thickness of the lamp strip, and the protrusions are abutting on the frame of the lamp strip.

Preferably, the thickness of the light guide plate is reduced along the direction away from the fixing part.

The present disclosure also provides a backlight module which includes a lamp strip and a light guide plate, and further includes a quantum dot glass tube and a fixing part, the fixing part being a hollow structure, the quantum dot glass tube being provided in the cavity of the fixing part which is positioned between the lamp strip and the light guide plate, one side wall of the fixing part being abutting on the frame of the lamp strip, and the other side wall of the fixing part being engaging with the light guide plate; the side wall facing the light guide plate of the fixing part is provided with an engaging groove, the width of the engaging groove being coincided with the thickness of the light guide plate, and the edge of the light guide plate being engaging in the engaging groove.

Preferably, the opposite side walls of the engaging groove to form extend position bars toward the cavity of the engaging groove respectively, the edge of the light guide plate is provided with guide slots at positions corresponding to the position bars, and the position bars are matched with the guide slots.

Preferably, the thickness of the light guide plate is reduced along the direction away from the fixing part.

Preferably, the side wall facing the lamp strip of the fixing part is provided with a plurality of first recesses arranged in turn, the shape of the first recess is matched with the shape of an LED lamp in the lamp strip, and after the frame of the first recess abuts on the frame of the lamp strip, one LED lamp is correspondingly received in one first recess.

Preferably, the side wall facing the lamp strip of the fixing part is provided with a second recess, the shape of the second recess is matched with the shape of the lamp strip, and after the frame of the second recess abuts on the frame of the lamp strip, the lamp strip is received in the second recess.

Preferably, the side wall facing the lamp strip of the fixing part is provided with a plurality of protrusions at the four corners or the four edges thereof respectively, the height of the protrusion is greater than the thickness of the lamp strip, and the protrusions are abutting on the frame of the lamp strip.

The present disclosure further provides a backlight module which includes a lamp strip and a light guide plate, and further includes a quantum dot optical film located between the lamp strip and the light guide plate, a side wall facing the quantum dot optical film of the light guide plate is provided with a third recess, and the quantum dot optical film is attached to the edge of the third recess.

Preferably, the third recess is provided with a plurality of folds at the bottom surface thereof.

Preferably, the thickness of the light guide plate is reduced along the direction away from the quantum dot optical film.

Preferably, there is a plurality of the third recesses, and each third recess corresponds to an LED lamp.

Preferably, there is one third recess, and the third recess corresponds to the whole lamp strip.

By means of utilizing the fixing part to place the quantum dot glass tube in the present disclosure, a proper distance is maintained among the lamp strip, the light guide plate and the quantum dot glass tube, and the lamp strip and the light guide plate can be fixed.

### BRIEF DESCRIPTION OF THE DRAWINGS

FIG 1 is a schematically exploded view of the lamp strip, the light guide plate, the quantum dot glass tube and the fixing part in the backlight module according to the present disclosure;
FIG 2 is a schematically structural view of the fixing part in the backlight module according to the present disclosure;
FIG 3 is a schematically structural view of the fixing part provided with a first recess in the backlight module according to the present disclosure;
FIG 4 is a schematically structural view of the fixing part provided with a second recess in the backlight module of the first embodiment according to the present disclosure;
FIG 5 is a schematically structural view of the fixing part provided with a protrusion in the backlight module of the first embodiment according to the present disclosure;
FIG 6 is a schematically structural view of the light guide plate provided with a guide slot in the backlight module of the first embodiment according to the present disclosure;
FIG 7 is a schematically structural view of the fixing part provided with a position bar in the backlight module of the first embodiment according to the present disclosure;
FIG 8 is a schematically structural view of the light guide plate having a wedge shape in the backlight module of the first embodiment according to the present disclosure;
FIG 9 is a schematically structural view of the backlight module according to the present disclosure;
FIG 10 is a schematically structural view of the light guide plate provided with a third recess in the backlight module according to the present disclosure;
FIG 11 is a schematically structural view of the light guide plate provided with a fold surface in the backlight according to the present disclosure.

The implementations, functional features and advantages of the present disclosure will be further described with reference to embodiments thereof and the accompanying drawings.

### DETAILED DESCRIPTION

It should be appreciate that, the embodiments described herein are only intended to illustrate but not to limit the present disclosure.

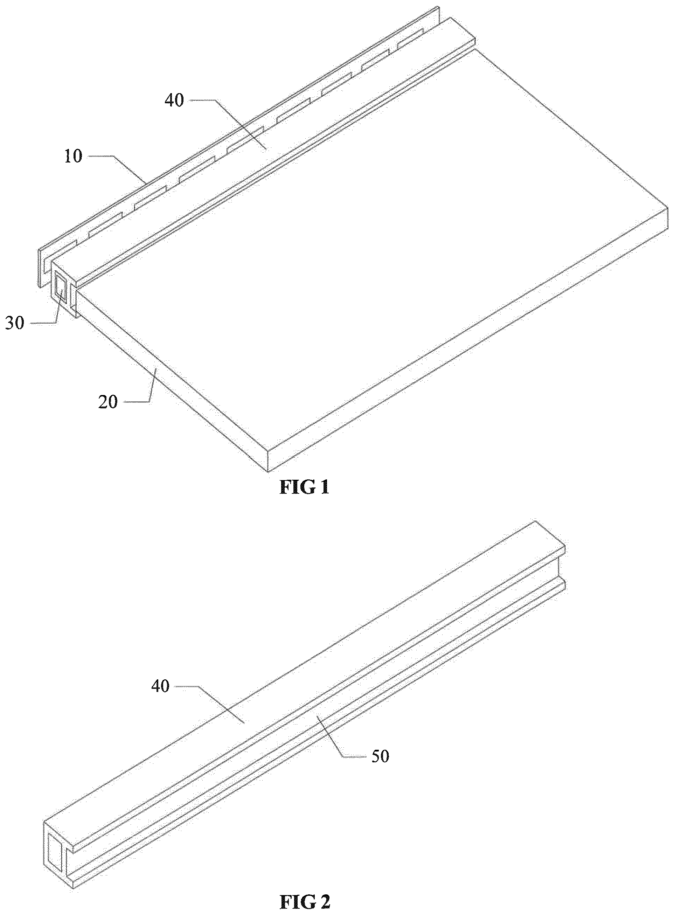

Referring to FIG 1 and FIG 2, FIG 1 is a schematically exploded view of the lamp strip, the light guide plate, the quantum dot glass tube and the fixing part in the backlight module according to the present disclosure, and FIG 2 is a schematically structural view of the fixing part in the backlight module according to the present disclosure.

The backlight module includes a lamp strip 10, a light guide plate 20, a quantum dot glass tube 30 and a fixing part 40, in which high-frequency LED light source can be used in the lamp strip 10 and the quantum dot glass tube 30 is designed to place quantum dot (QD) material into the glass tube. The quantum dot glass tube 30 can be a cuboid shape glass tube. Under irradiation of high-frequency LED light source, the QD material in the quantum dot glass tube 30 can be excited to produce spectrums having different colors, thus generates white backlight required by the backlight module.

To keep a proper distance among the lamp strip 10, the light guide plate 20 and the quantum dot glass tube 30, the fixing part 40 is adopted to place the quantum dot glass tube 30 and can fix the lamp strip 10 and the light guide plate 20. A detailed structure is as follows:
The fixing part 40 is a hollow structure, the quantum dot glass tube 30 is provided in the cavity of the fixing part 40 which is positioned between the lamp strip 10 and the light guide plate 20, one side wall of the fixing part 40 abuts on the frame of the lamp strip 10, and the other side wall of the fixing part 40 engages with the light guide plate 20. The side wall facing the light guide plate 20 of the fixing part 40 is provided with an engaging groove 50, the width of the engaging groove 50 is coincided with the thickness of the light guide plate 20, and the edge of the light guide plate 20 is engaging in the engaging groove 50, thus effectively prevent the light guide plate 20 from damage of impacting the quantum dot glass tube 30.

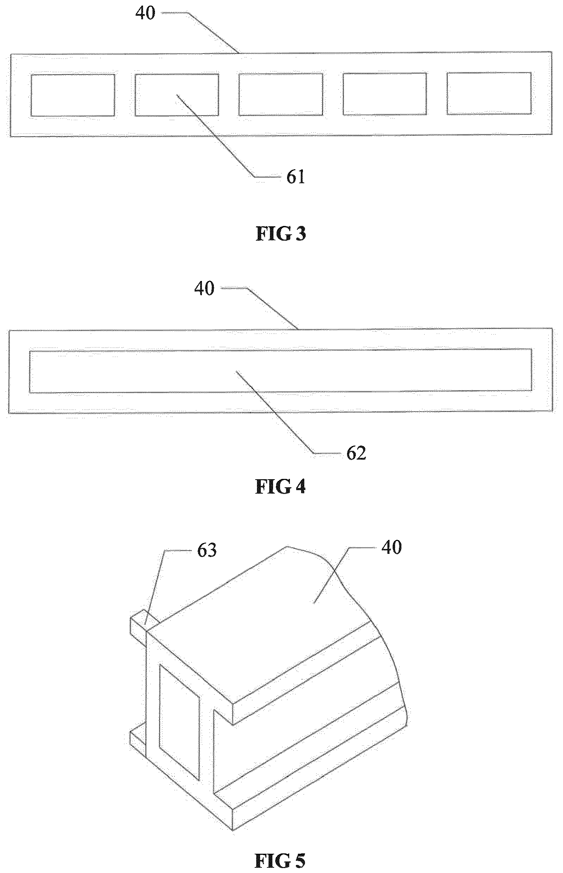

Referring to FIG 3, FIG 3 is a schematically structural view of the fixing part provided with a first recess in the backlight module according to the present disclosure. The side wall facing the lamp strip 10 of the fixing part 40 is provided with a plurality of first recesses 61 arranged in turn, the shape of the first recess 61 is matched with the shape of an LED lamp in the lamp strip 10, and after the frame of the first recess 61 abuts on the frame of the lamp strip 10, each LED lamp is correspondingly received in each first recess 61. The depth of the first recess 61 is slightly greater than the height of the LED lamp in the lamp strip 10, allowing a suitable interstice between the LED lamp received in the first recess 61 and the bottom of the first recess 61, which effectively avoids damage of the LED lamps caused by pressing due to the thermal expansion of the light guide plate 20.

Referring to FIG 4, FIG 4 is a schematically structural view of the fixing part provided with a second recess in the backlight module of the first embodiment according to the present disclosure. The difference between this embodiment and the device shown in FIG 3 is that, a second recess 62 in this embodiment is formed by connecting the plurality of first recesses in FIG 3. The shape of the second recess 62, such as the elongated shape in this embodiment, is matched with the shape of the lamp strip 10. After the frame of the second recess 62 abuts on the frame of the lamp strip 10, the whole lamp strip 10 is received in the second recess 62. The depth of the second recess 62 is slightly greater than the height of the LED lamp in the lamp strip 10, allowing a suitable interstice between the lamp strip 10 received in the second recess 62 and the bottom of the first recess 62, which effectively avoids damage to the LED lamps caused by pressing due to the thermal expansion of the light guide plate 20.

Referring to FIG 5, FIG 5 is a schematically structural view of the fixing part 40 provided with a protrusion in the backlight module of the first embodiment according to the present disclosure. In order to improve the heat dissipation issue, the first recess shown in FIG 3 or the second recess shown in FIG 4 can be replaced by a protrusion 63. A plurality of protrusions 63 is provided respectively at the four corners or four edges of a side wall facing the lamp strip 10 of the fixing part 40. The protrusion 63 can be rectangular, cube, cylinder, prism, etc.. The height of the protrusion 63 is larger than the thickness of the lamp strip 10. When the protrusions 63 abut on the frame of the lamp strip 10, there is an interstice between the lamp strip 10 and the fixing part 40, which also can effectively avoid damaging the LED lamps caused by pressing due to the thermal expansion of the light guide plate 20. Furthermore, the protrusions 63 can also be provided at the frame of the first recess in the device shown in FIG 3, or at the frame of the second recess in the embodiment shown in FIG 4, which benefits the heat dissipation of LED and the like.

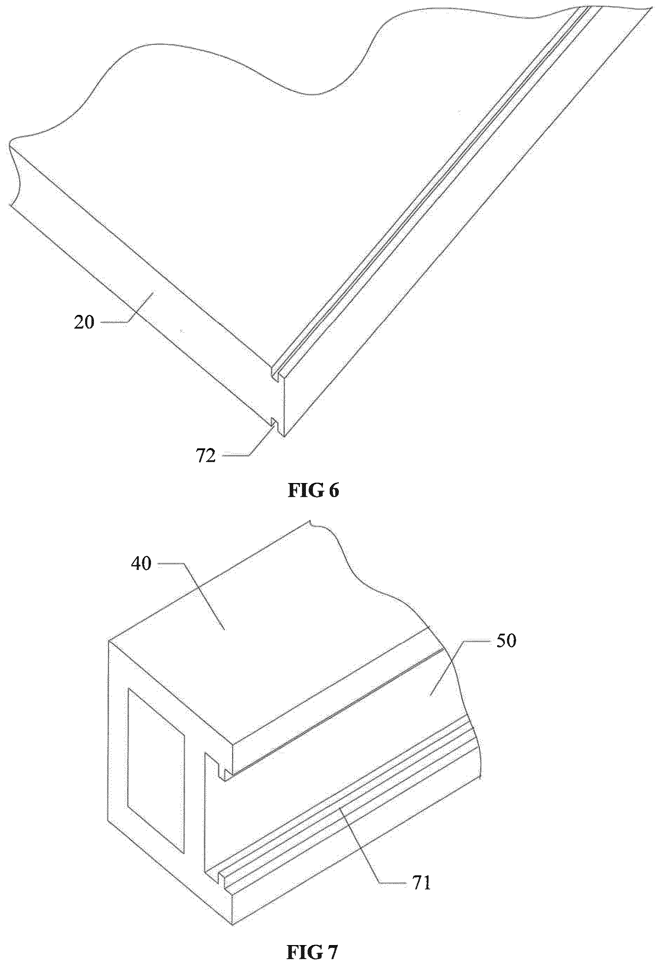

Referring to FIG 6 and FIG 7, FIG 6 is a schematically structural view of the light guide plate provided with a guide slot in the backlight module of the first embodiment according to the present disclosure, and FIG 7 is a schematically structural view of the fixing part provided with a position bar in the backlight module of the first embodiment according to the present disclosure. The difference between this embodiment and the device shown in FIG 2 is that, the opposite side walls of the engaging groove 50 extend to form position bars 71 facing the cavity of the engaging groove 50 respectively, the edge of the light guide plate 20 is provided with guide slots 72 at the positions corresponding to the position bars 71, the position bars 71 are matched with the guide slots 72 and slide into the guide slots 72 through an opening at a side face of the guide slots 72, achieving engagement between the position bars 71 and the guide slots 72, thus benefit to fix the connection between the light guide plate 20 and the fixing part 40.

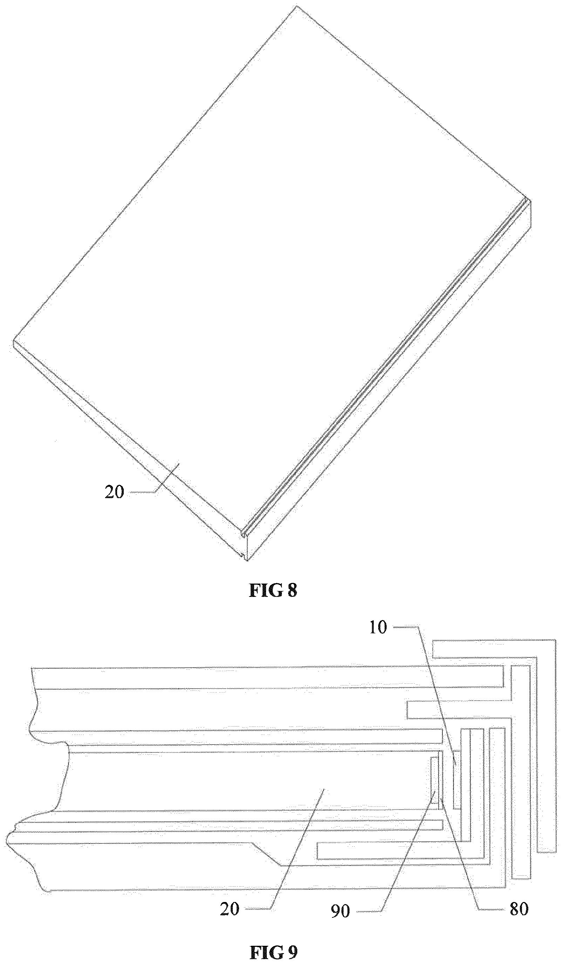

Referring to FIG 8, FIG 8 is a schematically structural view of the light guide plate having a wedge shape in the backlight module of the first embodiment according to the present disclosure. In this embodiment, the thickness of the light guide plate 20 is reduced along the direction away from the fixing part 40, forming a wedge shape, which benefit to reduce the thickness of the light guide plate 20, and further to reduce the weight of the whole backlight module.

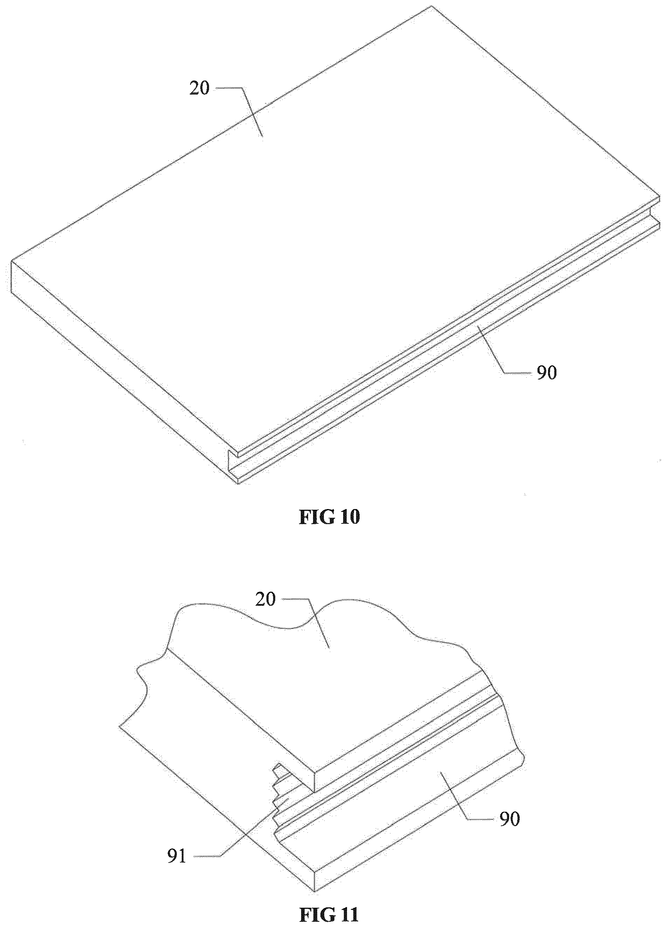

Referring to FIG 9 and FIG 10, FIG 9 is a schematically structural view of the backlight module according to the present disclosure, and FIG 10 is a schematically structural view of the light guide plate 20 provided with a third recess 90 in the backlight module according to the present disclosure.

The difference between the backlight module and the embodiments shown in FIG 4 to FIG 8 is that, besides including the lamp strip 10 and the light guide plate 20, the backlight module further includes a quantum dot optical film 80. The quantum dot optical film 80 is obtained by processing the QD material into an optical film. The quantum dot optical film 80 is located between the lamp strip 10 and the light guide plate 20. A side wall facing the quantum dot optical film 80 of the light guide plate 20 is provided with a third recess 90. The quantum dot optical film 80 is attached to the edge of the third recess 90. Only a very narrow quantum dot optical film 80 is needed, which will not affect the output of light, and at the same time, benefit to reduce the width of the backlight module to achieve a narrow frame LCD. The shape and the number of the third recess 90 can refer to those of the first recess in the device shown in FIG 3, such as there is a plurality of third recesses and each of which corresponds to an LED lamp; or to those of the second recess in the embodiment shown in FIG 4, for example there is one third recess which corresponds to the whole lamp strip. In addition, to reduce the weight of the entire backlight module, the thickness of the light guide plate 20 can also be reduced in a direction away from the quantum dot optical film 80, i.e. it is designed to be wedge-shaped.

Referring to FIG 11, FIG 11 is a schematically structural view of the light guide plate 20 provided with a fold surface in the backlight module according to the present disclosure. The difference between this device and the device shown in FIG 10 is that, the third recess 90 is provided with a plurality of folds 91 at the bottom surface thereof, which benefit to improve the uniformity of the light.

What described above are only preferred examples and embodiments of the present disclosure but are not intended to limit the scope of the present disclosure.

## Claims

1. A backlight module comprising a lamp strip (10) and a light guide plate (20), and further comprising a quantum dot glass tube (30) and a fixing part (40), the fixing part (40) being a hollow structure, the quantum dot glass tube (30) being provided in the cavity of the fixing part (40) which is positioned between the lamp strip (10) and the light guide plate (20), one side wall of the fixing part (40) being adjacent to the frame of the lamp strip (10), and the other side wall of the fixing part (40) being engaging with the light guide plate (20), **characterized in that** the side wall facing the lamp strip (10) of the fixing part (40) is provided with a second recess (62), the shape of the second recess (62) is matched with the shape of the lamp strip (10), the frame of the second recess (62) abuts on the frame of the lamp strip (10), and the lamp strip (10) is received in the second recess (62).

2. The backlight module according to claim 1, wherein the second recess (62) in the side wall facing the lamp strip (10) of the fixing part (40) comprises a plurality of first recesses (61) arranged in turn, the shape of each of the first recess (61) is matched with the shape of an LED lamp in the lamp strip, (10) the frame of each of the first recess (61) abuts on the frame of the lamp strip (10), and one LED lamp is correspondingly received in each of first recess (61).

3. The backlight module accordingto claim 1, wherein the thickness of the light guide plate (20) is reduced along the direction away from the fixing part (40).

## Patentansprüche

1. Hintergrundbeleuchtungsmodul, aufweisend einen Lampenstreifen (10) und eine Lichtfiihrungsplatte (20), und ferner aufweisend eine Quantenpunktglasröhre (30) und ein Befestigungsteil (40), wobei das Befestigungsteil (40) eine hohle Struktur ist, sich die Quantenpunktglasröhre (30) in der Höhlung des Befestigungsteils (40), das zwischen dem Lampenstreifen (10) und der Lichtführungsplatte (20) positioniert ist, befindet, eine Seitenwand des Befestigungsteils (40) neben dem Rahmen des Lampenstreifens (10) liegt, und die andere Seitenwand des Befestigungsteils (40) mit der Lichtführungsplatte (20) in Eingriff steht, **dadurch gekennzeichnet, dass** die Seitenwand, die dem Lampenstreifen (10) des Befestigungsteils (40) gegenüberliegt, über eine zweite Vertiefung (62) verfügt, die Form der zweiten Vertiefung (62) zu der Form des Lampenstreifens (10) passt, der Rahmen der zweiten Vertiefung (62) an den Rahmen des Lampenstreifens (10) stößt, und der Lampenstreifen (10) in der zweiten Vertiefung (62) aufgenommen ist.

2. Hintergrundbeleuchtungsmodul nach Anspruch 1, wobei die zweite Vertiefung (62) in der dem Lampenstreifen (10) des Befestigungsteils (40) gegenüberliegenden Seitenwand eine Mehrzahl an ersten Vertiefungen (61) aufweist, die abwechselnd angeordnet sind, die Form von jeder der ersten Vertiefungen (61) zu der Form einer LED-Lampe in dem Lampenstreifen (10) passt, der Rahmen von jeder der ersten Vertiefungen (61) an den Rahmen des Lampenstreifens (10) anstößt und eine LED-Lampe entsprechend in jeder der ersten Vertiefungen (61) aufgenommen ist.

3. Hintergrundbeleuchtungsmodul nach Anspruch 1, wobei die Dicke der Lichtführungsplatte (20) entlang der Richtung weg von dem Befestigungsteil (40) reduziert ist.

## Revendications

1. Module de rétroéclairage comprenant une bande de lampe (10) et une plaque de guidage de lumière (20), et comprenant en outre un tube de verre à points quantiques (30) et une partie de fixation (40), la partie de fixation (40) étant une structure creuse, le tube de verre à points quantiques (30) étant fourni dans la cavité de la partie de fixation (40) qui est positionnée entre la bande de lampe (10) et la plaque de guidage de lumière (20), une paroi latérale de la partie de fixation (40) étant adjacente au cadre de la bande de lampe (10), et l'autre paroi latérale de la partie de fixation (40) étant en prise avec la plaque de guidage de lumière (20), **caractérisé en ce que** la paroi latérale orientée vers la bande de lampe (10) de la partie de fixation (40) est dotée d'un second évidement (62), la forme du second évidement (62) correspond à la forme de la bande de lampe (10), le cadre du second évidement (62) est en butée sur le cadre de la bande de lampe (10), et la bande de lampe (10) est reçue dans le second évidement (62).

2. Module de rétroéclairage selon la revendication 1, dans lequel le second évidement (62) dans la paroi latérale orientée vers la bande de lampe (10) de la partie de fixation (40) comprend une pluralité de premiers évidements (61) agencés séquentiellement, la forme de chacun des premiers évidements (61) correspond à la forme d'une lampe à DEL dans la bande de lampe (10), le cadre de chacun des premiers évidements (61) est en butée sur le cadre de la bande de lampe (10), et une lampe à DEL est reçue de manière correspondante dans chacun des premiers évidements (61).

3. Module de rétroéclairage selon la revendication 1, dans lequel l'épaisseur de la plaque de guidage de lumière (20) diminue le long de la direction s'éloignant de la partie de fixation (40).
